# EUROPÄISCHE PATENTSCHRIFT

(11) **EP 1 048 692 B1**
(45) Veröffentlichungstag und Bekanntmachung des Hinweises auf die Patenterteilung: **18.08.2004**
(21) Anmeldenummer: 00107967.2
(22) Anmeldetag: 17.04.2000
(51) Int. Cl.: C08L 75/04, C08L 75/06, C08C 19/28

(54) **Polyurethan-Kautschukmischungen enthaltend modifizierte Kautschukgele**
Polyurethane-rubber blends containing modified rubber-gels
Mélanges polyuréthane-caoutchouc contenant des gels modifiés de caoutchouc

(30) Priorität: 29.04.1999 DE 19919459
(43) Veröffentlichungstag der Anmeldung: 02.11.2000
(73) Patentinhaber: Rhein Chemie Rheinau GmbH, 68219 Mannheim (DE)
(72) Erfinder: Früh, Thomas, Dr., 67061 Ludwigshafen (DE); Heiliger, Ludger, Dr., 67433 Neustadt (DE); Hoffmann, Uwe, Dr., 68723 Schwetzingen (DE); Issel, Hans-Martin, Dr., Tokyo 159-0015 (JP); Obrecht, Werner, Dr., 47447 Moers (DE)
(74) Vertreter: Gille Hrabal Struck Neidlein Prop Roos

(56) Entgegenhaltungen:
- EP-A- 0 473 972
- EP-A- 0 563 710
- PATENT ABSTRACTS OF JAPAN vol. 1997, no. 06, 30. Juni 1997 (1997-06-30) & JP 09 042274 A (ODAKA GOMME KOGYO KK), 10. Februar 1997 (1997-02-10)
- PATENT ABSTRACTS OF JAPAN vol. 013, no. 477 (M-885), 27. Oktober 1989 (1989-10-27) & JP 01 188797 A (YOBEA RULON KOGYO KK), 28. Juli 1989 (1989-07-28)

## Beschreibung

Die Erfindung betrifft Mischungen aus Kautschukgelen, die durch funktionelle, sich gegenüber C=C-Doppelbindungen reaktiv verhaltenden Gruppen modifiziert sind, und Polyurethankautschuke sowie daraus hergestellte Vulkanisate.

Es ist bekannt Kautschukgele, auch modifizierte Kautschukgele, in Abmischungen mit verschiedensten Kautschuken einzusetzen, um beispielsweise den Rollwiderstand bei der Herstellung von Kfz-Reifen zu verbessern (siehe z.B. DE 42 20 563, GB-PS 10 78 400, EP 405 216 und EP 854 171). Nicht beschrieben in den genannten Dokumenten wird der Einsatz von modifizierten Kautschukgelen in Mischungen mit Polyurethankautschuken (PUR-Kautschuken).

Es wurde jetzt gefunden, daß in spezieller Weise modifizierte Kautschukgele eine hohe Verstärkungswirkung in PUR-Kautschuk-Vulkanisaten zeigen und daß diese Gele die Hydrolysebeständigkeit der Vulkanisate wesentlich zu verbessern vermögen. Darüber hinaus bewirken die Kautschukgele eine Verbesserung des Druckverformungsrestes unter Beibehaltung der übrigen Vulkanisationseigenschaften.

Gegenstand der Erfindung sind daher Mischungen aus
A) mindestens einem Kautschukgel, das durch funktionelle, gegenüber C=C-Doppelbindungen reaktive Gruppen modifiziert ist, und
B) mindestens einem Polyurethan-Kautschuk (PUR-Kautschuk), wobei der Anteil an modifiziertem Kautschukgel (A) 1 bis 100, bevorzugt 1 bis 25 Gew.-Teile, bezogen auf 100 Gew.-Teile PUR-Kautschuk, beträgt.

Unter Kautschukgelen werden Mikrogele verstanden, die durch Vernetzung folgender Kautschuke erhalten werden:
- BR:: Polybutadien,
- ABR:: Butadien/Acrylsäure-C₁-C₄-alkylestercopolymere,
- IR:: Polyisopren,
- SBR:: Styrol-Butadien-Copolymerisate mit Styrolgehalten von 1 bis 60, vorzugsweise 2 bis 50 Gew.-%,
- X-SBR:: carboxylierte Styrol-Butadien-Copolymerisate,
- FKM:: Fluorkautschuk,
- ACM:: Acrylatkautschuk,
- NBR:: Polybutadien-Acrylnitril-Copolymerisate mit Acrylnitrilgehalten von 5 bis 60, vorzugsweise 10 bis 50 Gew.-%,
- X-NBR:: carboxylierte Nitrilkautschuke,
- CR:: Polychloropren,
- IIR:: Isobutylen/Isopren-Copolymerisate mit Isoprengehalten von 0,5 bis 10 Gew.-%,
- BIIR:: bromierte Isobutylen/Isopren-Copolymerisate mit Bromgehalten von 0,1 bis 10 Gew.-%,
- CIIR:: chlorierte Isobutylen/Isopren-Copolymerisate mit Bromgehalten von 0,1 bis 10 Gew.-%,
- HNBR:: teil- und vollhydrierte Nitrilkautschuke,
- EPDM:: Ethylen-Propylen-Dien-Copolymerisate,
- EAM:: Ethylen/Acrylatcopolymere,
- EVM:: Ethylen/Vinylacetatcopolymere,
- ECO:: Epichlorhydrinkautschuk,
- Q:: Silikonkautschuke,
- NR:: Naturkautschuke,
- AU:: Polyesterurethanpolymerisate,
- EU:: Polyetherurethanpolymerisate,
- ENR:: epoxydierter Naturkautschuk oder Mischungen davon.

Die mit funktionellen Gruppen modifizierten Kautschukgele besitzen Teilchendurchmesser von 5 bis 1000 nm, bevorzugt 20 bis 600 nm (DVN-Wert nach DIN 53 206) und Quellungsindizes (Qᵢ) in Toluol von 1 bis 15, vorzugsweise 1 bis 10. Der Quellungsindex wird aus dem Gewicht des lösungsmittelhaltigen Gels (nach Zentrifugation mit 20 000 Upm) (Naßgewicht des Gels) und dem Gewicht des trockenen Gels folgendermaßen berechnet:
Qᵢ= Naßgewicht des Gels/Trockengewicht des Gels.

Zur Ermittlung des Quellungsindex läßt man z.B. 250 mg Gel in 25 ml Toluol 24 Stunden lang unter Schütteln quellen. Das Gel wird abzentrifugiert, gewogen und anschließend bei 70°C bis zur Gewichtskonstanz getrocknet und dann nochmals gewogen.

Die Herstellung der unvernetzten Kautschuk-Ausgangsprodukte kann beispielsweise durch Emulsionspolymerisation (beschrieben beispielsweise von I. Franta in Elastomers and Rubber Compounding Materials, Elsivier Amsterdam 1989, Seite 88 bis 92, oder durch Lösungspolymerisation, siehe z.B. Römpp Chemie Lexikon, 9. Auflage, S. 2542, Houben-Weyl E20, 195-201) erfolgen. Außerdem können natürlich vorkommende Latices, wie Naturkautschuklatices, eingesetzt werden.

Die unvernetzten Kautschukausgangsprodukte besitzen im allgemeinen Mooney-Viskositäten (nach DIN 53 523) von 10 bis 100 (ML 1+4)/100°C und Glasübergangstemperaturen von unter 0°C, vorzugsweise unter -10°C.

Bei der Emulsionspolymerisation kann die Vernetzung des aus den bekannten, radikalisch polymerisierbaren Monomeren (wie Butadien, Styrol, Acrylnitril, Isopren, Ester der Acryl- und Methacrylsäure, Tetrafluorethylen, Vinylidenfluorid, Hexafluorpropen, 2-Chlorbutadien, 2,3-Dichlorbutadien sowie doppelbindungshaltige Carbonsäuren, wie Acrylsäure, Methacrylsäure, Maleinsäure, Itaconsäure, doppelbindungshaltige Hydroxy-Verbindungen, wie Hydroxyethylmethacrylat, Hydroxyethylacrylat, Hydroxybutylmethacrylat) erhaltenen Kautschuks direkt während der Emulsionspolymerisation durch Copolymerisation mit vernetzend wirkenden multifunktionellen Verbindungun erreicht werden. Bevorzugte multifunktionelle Comonomere sind Verbindungen mit mindestens 2, vorzugsweise 2 bis 4, copolymerisierbaren C=C-Doppelbindungen, wie Diisopropenylbenzol, Divinylbenzol, Divinylether, Divinylsulfon, Diallylphthalat, Triallylcyanurat, Triallylisocyanurat, 1,2-Polybutadien, N,N'-m-Phenylenmaleimid, 2,4-Toluylenbis(maleimid) und/oder Triallyltrimellitat. Darüber hinaus kommen in Betracht die Acrylate und Methacrylate von mehrwertigen, vorzugsweise 2 bis 4-wertigen C₂- bis C₁₀-Alkoholen, wie Ethylenglykol, Propandiol, Butandiol, Hexandiol, Polyethylenglykol mit 2 bis 20, vorzugsweise 2 bis 8 Oxyethyleneinheiten, Neopentylglykol, Bisphenol-A, Glycerin, Trimethylolpropan, Pentaerythrit, Sorbit mit ungesättigten Polyestern aus aliphatischen Di- und Polyolen, sowie Maleinsäure, Fumarsäure und/oder Itaconsäure.

Die Vernetzung zu Kautschukgelen während der Emulsionspolymerisation kann auch durch Fortführung der Polymerisation bis zu hohen Umsätzen oder im Monomerzulaufverfahren durch Polymerisation mit hohen internen Umsätzen erfolgen. Eine andere Möglichkeit besteht auch in der Durchführung der Emulsionspolymerisation in Abwesenheit von Reglern.

Für die Vernetzung der unvernetzten oder schwach vernetzten Mikrogel-Ausgangsprodukte im Anschluß an die Emulsions-Polymerisation setzt man am besten Latices ein, die bei der Emulsionspolymerisation erhalten werden. Prinzipiell kann diese Methode auch bei nicht wässrigen Polymerdispersionen angewandt werden, die auf anderer Weise, wie durch Umlösen, zugänglich sind. Auch Naturkautschuklatices können auf diese Weise vernetzt werden.

Die Vernetzung der Kautschuke zu Kautschukgelen kann auch in Latexform durch Nachvernetzung mit vernetzend wirkenden Chemikalien erfolgen. Geeignete vernetzend wirkende Chemikalien sind beispielsweise organische Peroxide, wie Dicumylperoxid, t-Butylcumylperoxid, Bis-(t-butyl-peroxy-isopropyl)benzol, Di-tbutylperoxid, 2,5-Dimethylhexan-2,5-dihydroperoxid, 2,5-Dimethylhexin-3,2,5-dihydroperoxid, Dibenzoylperoxid, Bis-(2,4-dichlorobenzoyl)peroxid, t-Butylperbenzoat sowie organische Azoverbindungen, wie Azo-bis-isobutyronitril und Azobis-cyclohexannitril, sowie Di- und Polymercaptoverbindungen, wie Dimercaptoethan, 1,6-Dimercaptohexan, 1,3,5-Trimercaptotriazin, und Mercapto-terminierte Polysulfidkautschuke, wie Mercapto-terminierte Umsetzungsprodukte von bis-Chlorethylformal mit Natriumpolysulfid. Die optimale Temperatur zur Durchführung der Nachvernetzung ist naturgemäß von der Reaktivität des Vernetzers abhängig und kann bei Temperaturen von Raumtemperatur bis ca. 180°C gegebenenfalls unter erhöhtem Druck durchgeführt werden (siehe hierzu Houben-Weyl, Methoden der organischen Chemie, 4. Auflage, Band 14/2, Seite 848). Besonders bevorzugte Vernetzungsmittel sind Peroxide.

Die Vernetzung C=C-Doppelbindungen enthaltender Kautschuke zu Mikrogelen kann auch in Dispersion bzw. Emulsion bei gleichzeitiger, partieller, gegebenenfalls vollständiger, Hydrierung der C=C-Doppelbindung durch Hydrazin, wie in US 5 302 696 oder US 5 442 009 beschrieben, oder gegebenenfalls andere Hydrierungsmitteln, beispielsweise Organometallhydridkomplexe, erfolgen.

Auch Kautschuke, die in organischen Lösungsmitteln hergestellt wurden, können als Ausgangsprodukte zur Herstellung der Kautschukgele dienen. In diesem Fall empfiehlt es sich, die Lösung des Kautschuks gegebenenfalls unter Zuhilfenahme eines Emulgators in Wasser zu emulgieren und die so erhaltene Emulsion vor oder nach der Entfernung des organischen Lösungsmittels mit geeignetem Vernetzer nachträglich zu vernetzen. Als Vernetzer eignen sich die zuvor genannten Vernetzer.

Unter dem Begriff "Modifizierung mit funktionellen Gruppen" wird die chemische Umsetzung der bereits vernetzten Kautschukteilchen mit gegenüber C=C-Doppelbindungen reaktiven Chemikalien verstanden. Dies sind insbesondere solche Verbindungen, mit deren Hilfe polare Gruppen, wie Aldehyd-, Hydroxyl-, Carboxylund/oder Nitrilgruppen sowie schwefelhaltige Gruppen, wie Mercapto-, Dithiocarbamat-, Polysulfid-, Xanthogenat-, Thiobenzthiazol- und/oder Dithiophosphorsäuregruppen, sowie ungesättigte Dicarbonsäuregruppen an die vernetzten Kautschukteilchen chemisch gebunden werden können. Dies trifft auch auf N,N'-m-Phenylendiamin, 1,4-Benzochinondioxim oder Dibenzoyl-para-Chinondioxin zu. Ziel der Modifizierung der Kautschukgele ist die Verbesserung der Verträglichkeit der Kautschukgele mit der PUR-Kautschukmatrix, um so eine gute Verteilbarkeit der Komponenten bei der Mischungsherstellung sowie eine gute Ankopplung im vulkanisierten Zustand zu erreichen.

Eine besonders bevorzugte Methode zur Modifizierung der Kautschukgele ist die Pfropfung der Gele mit funktionellen Monomeren, die die zuvor erwähnten funktionellen Gruppierungen in die Kautschukgele einzuführen vermögen, sowie die Umsetzung der Kautschukgele mit niedermolekularen funktionellen Agentien.

Für die Pfropfung der Mikrogele mit funktionellen Monomeren geht man zweckmäßigerweise von der wäßrigen Mikrogeldispersion aus, die man mit polaren Monomeren, wie Acrylsäure, Methacrylsäure, Hydroxyethylmethacrylat, Hydroxyethylacrylat, Hydroxybutylmethacrylat, Glycidylmethacrylat, Glycidylacrylat, Acrylamid, Methacrylamid, N-Methoxymethylmethacrylsäureamid, N-Acetoxymethylmethacrylsäureamid, Acrylnitril, Hydroxyethylacrylat und/oder Hydroxy-ethylmethacrylat, Acrolein, N-Vinyl-2-pyrrolidon, N-Allyl-Harnstoff und N-Allyl-Thioharnstoff, unter den Bedingungen einer radikalischen Emulsionspolymerisation umsetzt. Auf diese Weise werden Mikrogele mit einer Kern/Schale-Morphologie erhalten, wobei die Schale eine hohe Verträglichkeit mit Polyurethanen aufweisen soll. Es ist wünschenswert, daß das im Modifikationsschritt verwendete Monomer möglichst quantitativ auf das unmodifizierte Mikrogel aufpfropft.

Prinzipiell denkbar ist auch eine Pfropfung der Mikrogele in nicht-wäßrigen Systemen, wobei auf diese Weise auch eine Modifikation mit Monomeren durch ionische Polymerisationsmethoden möglich wird.

Für eine Oberflächenmodifikation der Mikrogele mit niedermolekularen Agentien kommen insbesondere folgende Reagentien in Frage: elementarer Schwefel, Schwefelwasserstoff und/oder Alkylpolymercaptanen, wie 1,2-Dimercaptoethan oder 1,6-Dimercaptohexan, desweiteren Dialkyl- und Dialkylaryldithiocarbamate, wie den Alkalisalzen von Dimethyldithiocarbamat und/oder Dibenzyldithiocarbamat, ferner Alkyl- und Arylxanthogenaten, wie Kaliumethylxanthogenat und Natrium-isopropylxanthogenat, sowie die Umsetzung mit den Alkali- oder Erdalkalisalzen der Dibutyldithiophosphorsäure, Dioctyldithiophosphorsäure sowie Dodecyldithiophosphorsäure. Die genannten Reaktionen können vorteilhafterweise auch in Gegenwart von Schwefel durchgeführt werden, wobei der Schwefel unter Bildung polysulfidischer Bindungen mit eingebaut wird, so daß wirksame Schwefelspender entstehen. Zur Addition dieser Verbindungen können Radikalstarter, wie organische und anorganische Peroxide und/oder Azoinitiatoren, zugesetzt werden.

Als Modizierung doppelbindungshaltiger Kautschuke kommt darüber hinaus die Ozonolyse oder die Halogenierung mit Chlor, Brom oder Iod in Frage. Auch eine weitere Umsetzung modifizierter Mikrogele, wie die Herstellung Hydroxylgruppen enthaltender Mikrogele aus epoxidierten Mikrogelen, wird als chemische Modifikation von Mikrogelen verstanden.

Die Modifizierungsreaktionen können bei Temperaturen von 0 bis 180°C, bevorzugt 20 bis 95°C, gegebenenfalls unter Druck von 1 bis 30 bar, durchgeführt werden. Die Modifizierungen können an den Kautschukgelen in Substanz oder in Form ihrer Dispersion vorgenommen werden, wobei im letzteren Fall inerte, organische Lösungsmittel oder Wasser als Reaktionsmedium verwendet werden können. Besonders bevorzugt wird die Modifizierung in wäßriger Dispersion des vernetzten Kautschuks durchgeführt.

Die Menge des eingesetzten Modifizierungsmittels richtet sich nach dessen Wirksamkeit und der im Einzelfall gestellten Anforderungen und liegt im Bereich von 0,05 bis 30 Gew.-Teilen, bevorzugt 0,5 bis 20 Gew.-Teilen, insbesondere 0,1 bis 10 Gew.-Teilen, bezogen auf 100 Gew.-Teile Kautschukgel.

vor, während oder nach der Nachvernetzung kann gegebenenfalls eine Teilchenvergrößerung durch Agglomeration durchgeführt werden.

Die Modifizierungsrate beträgt in Abhängigkeit von dem jeweils eingesetzten Modifizierungsmittel etwa 0,5 bis 20%, bevorzugt 1 bis 15 %, bezogen auf Trockensubstanzgehalt des Latex.

Als Komponente B werden PUR-Kautschuke eingesetzt, die im allgemeinen durch Reaktion von Polyolen mit einem Unterschuß von Polyisocyanat gewonnen werden. Durch diese Vorverlängerung wird der erforderliche Aggregatzustand "walzbar" erhalten. Die PUR-Kautschuke besitzen üblicherweise eine Mooney-Viskosität von 10 bis 100, bevorzugt 20 bis 60 (ML 1+4)/100°C.

Urethan-Kautschuk besitzt im Vergleich zu konventionellen Kautschuk-Typen eine deutlich niedrigere Molmasse. Für praktische Belange wird das Verarbeitungsverhalten eines Urethan-Kautschuks, wie bei anderen Kautschuken, durch die Mooney-Viskosität charakterisiert. Eine nähere Beschreibung der einzusetzenden Urethan-Kautschuke findet sich in dem Kunststoff-Handbuch, Band 7, 3., neu bearbeitete Auflage, Polyurethane, Hanser-Verlag, 1993.

Die für die Herstellung der erfindungsgemäßen Komponente B geeigneten Polyole sind Polyole auf Polyesterbasis, in der Regel lineare Hydroxylpolyester mit Molmassen von 1000 bis 3000, vorzugsweise 1500 bis 2500. Sie werden in bekannter Weise durch Umsetzung von beispielsweise Adipinsäure mit einem oder mehreren Glykolen, wie 1,4-Butandiol, Diethylenglycol, Propylenglycol, Neopentylglycol, aufgebaut oder können erhalten werden durch Polymerisation von ε-Caprolacton.

Die genannten Polyesterpolyole werden bevorzugt mit Isocyanaten, wie TDI (Toluylendiisocyanat) oder MDI (Methylendiphenyldiisocyanat), in bestimmten Fällen auch mit NDI (Naphthalin-1,5-diisocyanat) oder TODI (3,3'-Dimethyl-4,4'-diisocyanato-biphenyl), zur Herstellung der Komponente B umgesetzt. Kettenverlängerer bei der Umsetzung der genannten Polyesterpolyole mit den Polyisocyanaten werden vor allem dort eingesetzt, wo sie eine spezielle Funktion im Vulkanisationssystem ausüben müssen. Für eine Vulkanisation mit Schwefel wird beispielsweise eine OH-funktionelle Verbindung mit einer Doppelbindung eingesetzt, wie Glycerinmonoallylether. Für eine peroxidische Vulkanisation wird MDI bevorzugt als Aufbaukomponente zur Herstellung der zuvor erwähnten PUR-Kautschuke eingesetzt.

Das Vorbereiten, Mischen und Umsetzen der genannten Ausgangsstoffe erfolgt nach den üblichen Arbeitsmethoden der Urethan-Chemie. Da die Reaktion zum festen Kautschuk wegen des Einsatzes von Isocyanat im Unterschuß und der bevorzugten Verwendung bifunktioneller Ausgangsstoffe relativ lange Zeit in Anspruch nimmt, läßt man das Gemisch meist als Block aushärten. Im allgemeinen wird die Blockware noch auf dem Mischwalzwerk oder in Innenmischern homogenisiert. Dabei können zugleich Zuschlagstoffe, wie Stearinsäure, beigemischt werden. Wie erwähnt finden sich nähere Einzelheiten zu den Urethan-Kautschuken in dem Kunststoff-Handbuch, Band 7, im Abschnitt 8.3.

Die erfindungsgemäßen Mischungen aus Kautschukgelen (A) und PUR-Kautschuken (B) können zusätzlich noch Füllstoffe und Kautschukhilfsmittel enthalten.

Besonders geeignete Füllstoffe zur Herstellung der erfindungsgemäßen Kautschukmischungen und Vulkanisate sind
- Ruße. Die hierbei zu verwendenden Ruße sind nach dem Flammruß-, Furnace- oder Gasruß-Verfahren hergestellt und besitzen BET-Oberflächen von 20 bis 200 m²/g, wie z.B. SAF-, ISAF-, IISAF-, HAF-, FEF- oder GPF-Ruße.
- hochdisperse Kieselsäuren, hergestellt z.B. durch Fällung von Lösungen von Silikaten oder Flammenhydrolyse von Siliciumhalogeniden mit spezifischen Oberflächen von 5 bis 1000, vorzugsweise 20 bis 400 m²/g (BET-Oberfläche) und mit Primärteilchengrößen von 5 bis 400 nm. Die Kieselsäuren können gegebenenfalls auch als Mischoxide mit anderen Metalloxiden, wie Al-, Mg-, Ca-, Ba-, Zn- und Ti-Oxiden, vorliegen.
- synthetische Silikate, wie Aluminiumsilikat, Erdalkalisilikate wie Magnesiumsilikat oder Calciumsilikat, mit BET-Oberflächen von 20 bis 400 m²/g und Primärteilchendurchmessern von 10 bis 400 nm.
- natürliche Silikate, wie Kaolin und andere natürlich vorkommende Kieselsäuren.
- Metalloxide, wie Zinkoxid, Calciumoxid, Magnesiumoxid, Aluminiumoxid.
- Metallcarbonate, wie Magnesiumcarbonat, Calciumcarbonat, Zinkcarbonat.
- Metallsulfate, wie Calciumsulfat, Bariumsulfat.
- Metallhydroxide, wie Aluminiumhydroxid und Magnesiumhydroxid.
- Glasfasern und Glasfaserprodukte (Latten, Stränge oder Mikroglaskugeln).
- Thermoplastfasern (Polyamid, Polyester, Aramid).
- Kautschukgele auf Basis Polychloropren und/oder Polybutadien oder auch aller anderer vorher beschriebener Gelpartikel, die einen hohen Vernetzungsgrad besitzen und Teilchengröße 5 bis 1000 nm.

Die genannten Füllstoffe können alleine oder im Gemisch eingesetzt werden. In einer besonders bevorzugten Ausführung des Verfahrens werden 10 bis 100 Gew.-Teile Kautschukgel (A), gegebenenfalls zusammen mit 0,1 bis 100 Gew.-Teilen Ruß und/oder 0,1 bis 100 Gew.-Teilen hellen Füllstoffen, jeweils bezogen auf 100 Gew.-Teile Kautschuk (B), zur Herstellung der Mischungen eingesetzt.

Die erfindungsgemäßen Kautschukmischungen können weitere Kautschukhilfsmittel enthalten wie Vernetzer, Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Füllstoffaktivatoren, wie beispielsweise Triethanolamin, Polyethylenglykol, Hexantriol, Bis-(triethoxysilylpropyl)-tetrasulfid oder anderen, die der Gummiindustrie bekannt sind.

Die Kautschukhilfsmittel werden in üblichen Mengen, die sich u.a. nach dem Verwendungszweck richten, eingesetzt. Übliche Mengen sind z.B. Mengen von 0,1 bis 50 Gew.-%, bezogen auf eingesetzte Mengen an Kautschuk (B).

Als übliche Vernetzer können Schwefel, Schwefelspender, Peroxide oder Vernetzungsmittel, wie beispielsweise Diisopropenylbenzol, Divinylbenzoly, Divinylether, Divinylsulfon, Diallylphthalat, Triallylcyanurat, Triallylisocyanurat, 1,2-Polybutadien, N,N'-m-Phenylenmaleinimid und/oder Triallyltrimellitat verwendet werden. Darüber hinaus kommen in Betracht die Acrylate und Methacrylate von mehrwertigen, vorzugsweise 2- bis 4-wertigen C₂- bis C₁₀-Alkoholen, wie Ethylenglykol, Propandiol-1,2-butandiol, Hexandiol, Polyethylenglykol mit 2 bis 20, vorzugsweise 2 bis 8 Oxyethyleneinheiten, Neopentylglykol, Bisphenol-A, Glycerin, Trimethylpropan, Pentaerythrit, Sorbit mit ungesättigten Polyestern aus aliphatischen Di-und Polyolen sowie Maleinsäure, Fumarsäure und/oder Itaconsäure.

Die erfindungsgemäßen Kautschukmischungen können darüber hinaus Vulkanisationsbeschleuniger enthalten. Beispiele für geeignete Vulkanisationsbeschleuniger sind Mercaptobenzthiazole, -sulfenamide, Guanidine, Thiurame, Dithiocarbamate, Thioharnstoffe und Thiocarbonate sowie Dithiophosphate. Die Vulkanisationsbeschleuniger, Schwefel und Schwefelspender oder Peroxide oder weitere Viernetzungsmittel wie beispielsweise dimeres 2,4-Toluylen-di-isocyanat oder 1,4-bis-1-Ethoxyhydrochinon werden in Mengen von 0,1 bis 40 Gew.-%, bevorzugt 0,1 bis 10 Gew.-%, bezogen auf die gesamte Menge an Kautschuk eingesetzt.

Die Vulkaniation der erfindungsgemäßen Kautschukmischungen kann bei Temperaturen von 100 bis 250°C, bevorzugt 130 bis 180°C, gegebenenfalls unter Druck von 10 bis 200 bar erfolgen.

Die erfindungsgemäßen Kautschukmischungen aus Kautschukgel (A) und den Kautschuken (B) können auf verschiedene Arten hergestellt werden: Zum einen ist selbstverständlich möglich, die festen Einzelkomponenten zu mischen. Dafür geeignete Aggregate sind beispielsweise Walzen, Innenmischer oder auch Mischextruder. Aber auch das Mischen durch Vereinigen der Latices der unvernetzten oder auch der vernetzten Kautschuke ist möglich. Die Isolierung der so hergestellten erfindungsgemäßen Mischungen kann wie üblich, durch Eindampfen, Ausfällen oder Gefrierkoagulation (vgl. US-PS 2.187.146) erfolgen. Durch Einmischen von Füllstoffen in die Latexmischungen und anschließende Aufarbeitung können die erfindungsgemäßen Mischungen direkt als Kautschuk-/Füllstoff-Formulierung erhalten werden.

Die weitere Abmischung der Kautschukmischungen aus dem modifizierten Kautschukgel (A) und PUR-Kautschuken (B) mit zusätzlichen Füllstoffen sowie gegebenenfalls Kautschukhilfsmitteln kann in üblichen Mischaggregaten, wie Walzen, Innenmischern oder auch Mischextrudern, durchgeführt werden. Bevorzugte Mischtemperaturen liegen bei 50 bis 180°C.

Die erfindungsgemäßen Kautschukvulkanisate eignen sich zur Herstellung von Formkörpern, z.B. für die Herstellung von Kabelmänteln, Schläuchen, Treibriemen, Förderbändern, Walzenbelägen, Reifen, insbesondere Reifenlaufflächen, Schuhsohlen, Dichtungsringen und Dämpfungselementen sowie Membranen.

### Beispiele

### Beispiel 1: Hydroxylgruppenmodifizierte BR- und SBR-Gele in PUR-Kautschuken/peroxidisch vernetzt (Mischungsserien A und B)

In den nachfolgend beschriebenen Mischungsserien (Mischungsserien A und B) der erfindungsgemäßen Beispiele wird gezeigt, daß mit hydroxylgruppenmodifizierten Mikrogelen auf Basis BR und SBR in peroxidisch vernetzter PUR-Matrix eine verstärkende Wirkung erzielt wird. Die mit den Mikrogelen erzielbaren Verstärkungseffekte sind ausgeprägter als die mit der üblicherweise eingesetzten Kieselsäure. Der Quellungsgrad der mikrogelhaltigen Vulkanisate ist in verschiedenen Medien niedriger als beim kieselsäuregefüllten Vulkanisat. Die Hydrolysebeständigkeit und die Alterungsbeständigkeit der mikrogelverstärkten Vulkanisate sind drastisch verbessert.

In der nachfolgenden Tabelle sind die analytischen Daten der für die Mikrogelherstellung eingesetzten Ausgangslatices sowie die Rahmenbedingungen für die Herstellung der funktionalisierten Mikrogele zusammengefaßt:

| **Gelbezeichnung** | **Polymer typ** | **Styrol gehalt** **[Gew.%]** | **Durchmesser** **[nm]** | | | **Dichte** **[g/cm**^{**3**}**]** | **Gelgehalt** **[%]** | **Quel lungsindex** | **Glastemperatur** **[°C]** | **DCP-Einsatz** **[phr]** | **HEMA-Einsatz** **[phr]** |
|---|---|---|---|---|---|---|---|---|---|---|---|
| | | | d₁₀ | d₅₀ | d₈₀ | | | | | | |
| I | SBR¹⁾ | 22 | 50 | 56 | 60 | 0,9281 | 75 | 61 | -57 | 1,5 | 3 |
| II | SBR¹) | 22 | 50 | 56 | 61 | 0,94 | 80 | 79 | -58 | 1,5 | 3 |
| III | SBR²⁾ | 42,5 | 43 | 52 | 59 | 0,9665 | 3 | 22 | -30,5 | 1,0 | 3 |
| IV | BR | 0 | 130 | 150 | 160 | 0,894 | 97 | 15 | -82,5 | 1,0 | 3 |
| V | BR | 0 | 130 | 150 | 160 | 0,894 | 97 | 15 | -82,5 | 2,0 | 3 |
| VIII | BR | 0 | 34 | 40 | 45 | 0,919 | 49 | 28,3 | -80,5 | 2,0 | 3 |
| VII2 | BR | 0 | 34 | 40 | 45 | 0,919 | 49 | 28,3 | -80,5 | 4,0 | 3 |
| VIII | BR | 0 | 34 | 40 | 45 | 0,919 | 49 | 28,3 | -80,5 | 2,5 | 6 |
| IX | BR | 0 | 34 | 40 | 45 | 0,919 | 49 | 28,3 | -80,5 | 2,5 | 9 |

| | | | | | | | | | | | |
|---|---|---|---|---|---|---|---|---|---|---|---|
| ¹) Ausgangslatex: Baystal® 1357 der Polymer Latex GmbH, Deutschland früher Bayer Polymeres France, Port Jérôme (nichtcarboxylierter SBR-Latex) | | | | | | | | | | | |
| ²) Ausgangslatex: ölfreier Krylene 1721 -Latex® der Bayer Polymeres France, DCP = Dicumylperoxid / HEMA = Hydroxyethylmethacrylat | | | | | | | | | | | |

Die Herstellung der hydroxylgruppenmodifizierten Mikrogele erfolgt auf der Basis o.g. Ausgangs-Latices in folgenden drei Verfahrensschritten:
1a) Vernetzung der in Latexform vorliegenden Kautschuke
1b) Pfropfung der vergelten Latices mit Hydroxyethylmethacrylat
1c) Stabilisierung und Aufarbeitung der hydroxylmodifizierten Mikrogele

Die Herstellung der mikrogelhaltigen Kautschukcompounds, die Vulkanisation der Compounds sowie die Prüfergebnisse sind nachfolgend beschrieben:
1d) Compoundherstellung und Vulkanisation
1 e) Prüfergebnisse Mischungsserie A
1 f) Prüfergebnisse Mischungsserie B

### 1a) Vernetzung der in Latexform vorliegenden Kautschuke

Für die Vernetzung mit Dicumylperoxid (DCP) werden die Latices auf eine Feststoffkonzentration von 30 Gew.% verdünnt und in einen Autoklaven gefüllt. DCP wird in fester Form bei Raumtemperatur zugegeben (Mengen wie in der Tabelle angegeben, jeweils in Gewichtsteilen bezogen auf 100 Gew.-Teile Festprodukt). Durch Aufheizen des Latex auf 60°C wird das DCP geschmolzen und unter Rühren gut im Latex verteilt. Zur Entfernung von Sauerstoff wird der Reaktorinhalt bei 60°C unter Rühren evakuiert und Stickstoff aufgepresst. Der Evakuierungs/N₂-Begasungszyklus wird 3 mal wiederholt. Danach wird der Reaktor auf 150°C aufgeheizt. Um Latexanbackungen beim Aufheizen zu vermeiden, wird darauf geachtet, daß die Differenz zwischen Mantel- und Innentempertur 10°C nicht übersteigt. Nach dem Aufheizen wird die Innentemperatur 45 Min. bei mindestens 150°C gehalten. Danach wird der Latex abgekühlt und filtriert.

Durch die Nachvernetzung der Polymeren mit Dicumylperoxyd ändern sich charakteristische analytische Daten wie in beiliegender Tabelle zusammengefasst. Die Dichte der Latexteilchen und der Gelgehalt des Polymeren nehmen zu; der Quellungsindex des vergelten Polymeranteils nimmt ab und die Glastemperatur steigt. Charakteristische analytische Kenndaten der vemetzten Polymeren (Mikrogele) sind in nachfolgender Tabelle zusammengefaßt:

| Gelbezeichnung | DCP-Einsatz [phr] | Dichte [g/cm3] | Gelgehalt [%] | Quellungsindex | Glastemperatur [°C] |
|---|---|---|---|---|---|
| I a | 1,5 | 0,9717 | 97,5 | 5,4 | -27 |
| II a | 1,5 | 0,9812 | 99 | 5,5 | -23,5 |
| III a | 1,0 | 0,9929 | 92 | 6,3 | -17 |
| IV a | 1,0 | 0,9499 | 98 | 6,3 | -55 |
| V a | 2,0 | 0,9929 | 98 | 4,7 | -17 |
| VII1a | 2,5 | 0,986 | 909 | 4,2 | -35 |
| VII2a | 4,0 | 0,996 | 89,3 | 3,15 | -0,5 |
| VIII | 2,5 | 0,996 | 91 | 4,2 | -35 |
| IX | 2,5 | 0,986 | 91 | 4,2 | -35 |

### 1b) Pfropfung der vergelten Latices mit Hydroxyethylmethacrylat.

Die Modifikation der nachvernetzten Polymeren mit Hydroxyethylmethacrylat (HEMA) erfolgt in Latexform und wird folgendermaßen durchgeführt:

Man legt jeweils den mit Dicumylperoxid vernetzten Latex in einem Reaktor vor und verdünnt den Latex mit Wasser, so daß der theoretische Endfeststoffgehalt des Latex bei quantitativem Umsatz von Hydroxyethylmethacrylat 20 Gew-.% beträgt. Nach dem Zusatz von 3 phr 97 %igen HEMAs (Aldrich), bezogen auf den Latexfeststoff gehalt, und der Zugabe von 0,12 phr 50 %iges p-Menthanhydroperoxid (Triganox NT 50/Akzo Chemie) erhitzt man unter Rühren die Reaktionsmischung auf 70°C und rührt 1 h bei dieser Temperatur. Dann gibt man innerhalb von 1 h 0,05 Gew.-%, bezogen auf Latexfeststoff, einer wässrigen 0,5 gew.%igen wässrigen Lösung des Na-Salzes von 1-Hydroxymethansulfinsäure-Dihydrat (Rongalit® /BASF) zu. Während der gesamten Umsetzung hält man den pH-Wert durch Zugabe 1 n NaOH bei pH 8 - 9. Nach einer Reaktionszeit von 1 h bei 70°C ist das Hydroxyethylmethacrylat zu ca. 95% umgesetzt.

### 1c) Stabilisierung und Aufarbeitung der hydroxylmodifizierten Mikrogele

Vor der Koagulation der hydroxylmodifizierten Mikrogele werden die Latices mit Alterungsschutzmittel jeweils in Mengen bezogen auf 100 Gew.-Teile Feststoff [phr] versetzt:
- 0,05 phr: 2,2-Methylen-bis-(4-Methyl-6-cyclohexylphenol) (Vulkanox® ZKF/Bayer AG)
- 0,22 phr: Di-t-Butyl-p-Kresol (Vulkanox® KB/Bayer AG)
- 0,38 phr: Di-Laurylthiodipropionat (PS 800® der Ciba Geigy).

Für die Fällung von 5 kg 20%iger Latices legt man eine Fällflotte bestehend aus 5 l Wasser und 200 g MgSO₄. 7H₂O vor. Dann gibt man den entsprechenden Latex unter Rühren bei Raumtemperatur zu und erhitzt die Reaktionsmischung auf 90°C. Danach kühlt man die Mischung durch Zugabe kalten Wassers auf 60°C ab, filtriert die Kautschukkrümel ab und wäscht mit ca 10 l Lewatitwasser nach. Man trocknet die Kautschukkrümel bei 70°C im Vakuumtrockenschrank bis zur Gewichtskonstanz (ca. 60 h).

| **Gelbezeichnung** | **Durchmesser d**_{**50**} **[nm]** | **Dichte [g/cm3]** | **Gelgehalt [%]** | **Quellungsindex** | **Glastemperatur [°C]** | **Hydroxyl-Zahl [mg KOH/g Polymer]** |
|---|---|---|---|---|---|---|
| I c | 57 | 0,981 | 97 | 4 | -25 | n. best. |
| II c | 56 | 0,987 | 96 | 5,6 | -9,5 | 9 |
| III c | 51 | 0,998 | 95 | 6,6 | -23 | 12,7 |
| IV c | 158 | 0,960 | 98 | 4,9 | n. best. | 9 |
| V c | 158 | 0,996 | 87 | 5 | n. best. | 10 |
| VII1 c | 40 | 0,986 | 92 | 5 | n. best. | n. best. |
| VII 2c | 40 | 0,998 | 92 | 4 | n. best. | n. best. |
| VIII c | 39 | 0,991 | 93 | 5 | n. best. | n. best. |
| IX c | 39 | 0,996 | 93 | 4 | n. best. | n. best. |

### 1d) Compoundherstellung und Vulkanisation

In einem Laborinnenmischer werden gemäß nachfolgender Rezeptur unterschiedliche Mengen (Angabe in phr) der nach den Beispiel 1a) - 1c) hergestellten und getrockneten Kautschukgele mit 100 phr eines Poly(urethan)kautschuks gemischt. Zum Ende des Mischprozesses werden die Vernetzungschemikalien hinzudosiert. Es werden folgende Mischungen hergestellt:

### Mischungsserie A:

| | | | | |
|---|---|---|---|---|
| Urepan® 640 G (Rhein Chemie GmbH) | 100 | 100 | 100 | 100 |
| Gel I c | - | 25 | 16,5 | 8,2 |
| Aflux® 54 (Rhein Chemie GmbH) | 1 | 1 | 1 | 1 |
| Aerosil® 200 (Degussa AG) | 22 | - | - | - |
| Triganox® 101 XL (Akzo) | 2,5 | 2,5 | 2,5 | 2,5 |

Die Vulkansiation wird bei 170°C durchgeführt. Die Vulkanisationszeit wird in einem Rheometerexperiment bei 170°C ermittelt.

### Mischungsserie B:

| **Formulierung** | **1** | **2** | **3** | **4** | **5** |
|---|---|---|---|---|---|
| Urepan® 640 G | 100 | 100 | 100 | 100 | 100 |
| Aerosil® 200 | 20 | - | - | - | - |
| II c | - | 10 | - | - | - |
| III c | - | - | 10 | - | - |
| IV c | - | - | - | 10 | - |
| V c | - | - | - | - | 10 |
| Perkadox® 14/40 | 4.5 | 4.5 | 4.5 | 4.5 | 4.5 |
| Rhenofit® TAC/S | 1 | 1 | 1 | 1 | 1 |

- Urepan® 640 G =: Spezialelastomer auf PU-Basis, Zugfestigkeit 20-42 MPa, Härte ShA: 45-85 (DIN 53 505)
- Triganox® 101XL =: 2,5-Bis(tert.-butylperoxy)-2,5-dimethylhexan
- Aerosil® 200 =: Kieselsäure (SiO₂) mittlere Größe der Teilchen: 12 nm, Oberfläche: 200 ± 25 m²/g
- Perkadox® 14/40 =: 60 % Kaolin und 40 % Bis(tert.-butylperoxyisopropyl)benzol
- Aflux® 54 =: Abmischung von Pentaerythritol tri- und -tetrastearat
- Rhenofit TAC/S =: 70 % Triallylcyanurat und 30 % Kieselsäure

Die Vulkansiation wird bei 170°C durchgeführt. Die Vulkanisationszeit wird in einem Rheometerexperiment bei 170°C ermittelt.

### 1e) Prüfergebnisse Mischungsserie A:

Auf der Basis o.g. Compounds werden folgende Prüfergebnisse erhalten:

| | | | | |
|---|---|---|---|---|
| Mischungs-Mooney (ML1+4/100°C) | 66 | 72 | 62 | 40 |

| Vulkanisation 170°C | | | | |
|---|---|---|---|---|
| Härte Shore A, 23°C | 63 | 81 | 77 | 59 |
| Rückprallelastizität, 23°C | 36 | 45 | 52 | 49 |
| Spannungswert bei 100 % Dehnung [MPa] | 2,5 | 11 | 6,6 | 3,8 |
| Spannungswert bei 300 % Dehnung [MPa] | 12,6 | - | 20,4 | 17,7 |
| Zugfestigkeit [MPa] | 34,1 | 22,6 | 28,4 | 29,2 |
| Reißdehnung [%] | 423 | 255 | 332 | 324 |
| Druckverformungsrest DIN 53517 [%] | 83 | 54 | 56 | 52 |
| Abrieb DIN 53516 [mm³] | 60 | 121 | 96 | 78 |

| Gleichgewichtsquellgrad Qi | | | | |
|---|---|---|---|---|
| Aceton | 2,09 | 1,67 | 1,79 | 1,91 |
| Essigsäure | 3,55 | 2,28 | 2,62 | 2,86 |
| Toluol | 1,49 | 1,43 | 1,47 | 1,50 |
| 1 N NaOH | *1 | 0,97 | 0,96 | 0,91 |
| VE Wasser (14 Tage 50°C) | 1,05 | 1,01 | 1,00 | 1,00 |

| | | | | |
|---|---|---|---|---|
| *1: Prüfkörper war innerhalb von 3 Tagen soweit angelöst, daß eine Messung nicht möglich war. | | | | |

### 1 f) Prüfergebnisse Mischungsserie B:

Auf der Basis o.g. Compounds werden folgende Prüfergebnisse erhalten:

| **Mischungseigenschaften** | | | | | |
|---|---|---|---|---|---|
| ML 1+4, 100°C | 74 | 52 | 49 | 50 | 48 |

| ML scorch, 150°C | | | | | |
|---|---|---|---|---|---|
| t5 (min) | 6.48 | 6.18 | 6.43 | 5.58 | 5.55 |
| t35 (min) | 10.52 | 10.03 | 10.45 | 9.03 | 8.87 |

| Rheometer, 170°C | | | | | |
|---|---|---|---|---|---|
| Fmax-Fmin | 0.81 | 0.76 | 0.72 | 0.89 | 0.89 |
| t10 (min) | 1.27 | 1.42 | 1.45 | 1.3 | 1.3 |
| t50 (min) | 3.49 | 3.49 | 3.6 | 3.07 | 3.05 |
| t90 (min) | 9.25 | 10 | 10.05 | 9.5 | 9.6 |
| Vmax (Nm/min) | 0.16 | 0.17 | 0.16 | 0.23 | 0.23 |

| **Vulkanisateigenschaften** | | | | | |
|---|---|---|---|---|---|
| Härte Shore A | 61 | 64 | 61 | 63 | 63 |
| Rückprallelastizität [%] | 37 | 49 | 49 | 50 | 50 |
| Zugfestigkeit [MPa] | 30 | 27 | 26 | 30 | 28 |
| Modul 100 % [MPa] | 1.7 | 3 | 3.2 | 3 | 2.8 |
| Modul 300 % [MPa] | 4.8 | 11.4 | 11.8 | 13.9 | 14.1 |
| Modul 500 % [MPa] | 19.8 | - | - | - | - |
| Reißdehnung [%] | 550 | 410 | 400 | 380 | 370 |
| Abrieb (mm³) | 98 | 90 | 82 | 87 | 87 |
| Druckverformungsrest, 3 Tage, 100°C [%] | 64 | 25 | 26 | 16 | 17 |
| Druckverformungsrest, 3 Tage, 125°C, [%] | 96 | 67 | 71 | 54 | 55 |

| **Heißluftalterung 7 Tage, 125°C** | | | | | |
|---|---|---|---|---|---|
| Härte Shore A | 74 | 66 | 65 | 67 | 65 |
| Rückprallelastizität [%] | 31 | 36 | 38 | 37 | 37 |
| Zugfestigkeit [MPa] | 29 | 26 | 23 | 24 | 29 |
| Modul 100 % [MPa] | 3.7 | 3.4 | 3.2 | 3.1 | 2.8 |
| Modul 300 % [MPa] | 19.5 | 12.7 | 13.4 | 13.3 | 13.4 |
| Modul 500 % [MPa] | - | - | - | - | - |
| Reißdehnung [%] | 370 | 410 | 380 | 360 | 390 |

| **Hydrolysewiderstand 7 Tage, 80°C, Wasser** | | | | | |
|---|---|---|---|---|---|
| Härte Shore A | 50 | 61 | 58 | 61 | 60 |
| Zugfestigkeit [MPa] | | 27 | 24 | 28 | 30 |
| Reißdehnung [%] | 700 | 440 | 420 | 390 | 420 |
| Volumenzunahme [%] | 11.4 | 2.9 | 2.3 | 1.6 | 1.5 |
| Gewichtszunahme [%] | 8.6 | 2.6 | 2.3 | 1.4 | 1.4 |

### Beispiel 2: carboxyliertes SBR-Mikrogel in PUR-Kautschukmatrix/peroxydisch vernetzt

Mit der im Beispiel 2 durchgeführten Serie wird gezeigt, daß durch den Einsatz eines carboxylierten SBR-Mikrogels anstelle der üblicherweise eingesetzten Kieselsäure in einer PUR-Matrix eine deutliche Verstärkungswirkung erzielt wird und daß die mikrogelhaltigen Vulkanisate im Vergleich mit dem silikagefüllten Vergleichsvulkanisat Vorteile im Alterungsverhalten und in der Hydrolysebeständigkeit aufweisen. Außerdem zeigt sich, daß das carboxylierte Mikrogel zusammen mit Kieselsäure als Füllstoff eingesetzt werden kann und daß durch den Mikrogelzusatz auch in derartigen Vulkanisaten positive Effekte erzielt werden.

### Herstellung des carboxylierten SBR-Mikrogels

Das carboxylgruppenmodifizierte SBR-Mikrogel wird ausgehend von dem nichtcarboxylierten SBR-Latex (Baystal 1357, siehe Beispiel 1) durch Vernetzung mit Dicumylperoxid und durch Pfropfung mit Methacrylsäure hergestellt.

### 2a) Vernetzung des in Latexform vorliegenden SBR-Kautschukes (Gel VI a)

Die Vernetzung des in Latexform vorliegenden SBRs wird mit 1,5 phr Dicumylperoxyd durchgeführt. Die Vorgehensweise ist im Beispiel 1a) beschrieben.

Durch die Vernetzung mit DCP werden die Teilchengröße und die Teilchengrößeverteilung des Latex praktisch nicht beeinflußt. Nach der Vernetzung mit DCP beträgt die Dichte der Latexteilchen 0,978 g/cm³; der Gelgehalt: 97 Gew.%; der Quellungsindex des vergelten Polymeranteils: 6 (Naßgewicht/Trockengewicht in Toluol); die Glastemperatur: -25°C.

### 2b) Pfropfung des SBR-Mikrogels mit Methacrylsäure (Gel VI b)

Die Carboxylierung des nachvernetzten SBR-Latex wird durch Pfropfung mit Methacrylsäure erreicht. Hierzu geht man folgendermaßen vor:

Man legt den mit 1,5 phr Dicumylperoxid vernetzten SBR-Latex in einem Autoklaven vor und versetzt den Latex bei Raumtemperatur zuerst mit 0,5 phr bezogen auf Latexfeststoff einer 3,2%igen wässrigen Lösung von Mersolat K® 30 (Na-Salz eines Alkysulfonats der Bayer AG). Vor der Zugabe der Methacrylsäure verdünnt man den Latex mit Wasser, so daß der theoretische Endfeststoffgehalt des Latex bei quantitativen Methacrylsäureumsatz 20 Gew.% beträgt. In den verdünnten Latex gibt man eine wässrige Lösung von 5 phr Methacrylsäure (Fa. Interorgana Köln) mit 0,5 phr einer 3,2%igen wässrigen Lösung des Natriumsalzes einer Alkylsulfonsäure (Mersolat® K30/Bayer AG). Nach der Zugabe von 0,2 phr 50%iges p-Menthanhydroperoxid (Triganox® NT 50 der Akzo Chemie) erhitzt man die Reaktionsmischlung auf 70°C und gibt innerhalb von 15 Min. 0,125 Gew.% bezogen auf Latexfeststoff eine wässrige Kaliumperoxodisulfatlösüng (0,7 Gew.%) zu. Nach einer Reaktionszeit von 3 h bei 70°C und 2 h bei 90°C beträgt der Polymerisationsumsatz ca. 85 %. Der pH-Wert des Latex beträgt 4,9. Der Durchmesser der Latexteilchen (Ultrazentrifugation) beträgt: d₁₀ = 47 nm; d₅₀ = 54 nm; d₈₀ = 60 nm; die Dichte der Latexteilchen beträgt: 0,971 g/cm³.

### 2c) Stabilisierung und Aufarbeitung des carboxylierten SBR-Mikrogels (= Gel VI c)

Die Stabilisierung des carboxylierten SBR-Mikrogels und die Isolierung des Polymers aus dem Latex wird wie in 1c) beschrieben, durchgeführt. Nach der Trocknung des Polymers beträgt der Gelgehalt 97 Gew.% (Bestimmung in Toluol bei Raumtemperatur); der Quellungsindex des vergelten Anteils beträgt 4 (Naßgewicht/Trockengewicht in Toluol). Die Säurezahl des Polymers beträgt 24,5 mg KOH/g Polymer und die Glastemperatur -23,5°C (Tg).

### 2d) Compoundherstellung und Vulkanisation

In einem Laborinnenmischer werden gemäß nachfolgender Rezeptur unterschiedliche Mengen (Angabe in phr) eines nach Beispiel 2a) bis 2c) hergestellten und getrockneten Kautschukgels mit 100 phr eines Polyurethankautschuks gemischt. Zum Ende des Mischprozesses werden die Vernetzungschemikalien hinzudosiert. Es werden unter anderem folgende Mischungen hergestellt:

| | | | | | |
|---|---|---|---|---|---|
| Urepan 640 G (Rhein Chemie GmbH) | 100 | 100 | 100 | 100 | 100 |
| Gel VI c | - | 10 | 10 | 20 | 30 |
| Aflux® 54 (Rhein Chemie GmbH) | 1 | 1 | 1 | 1 | 1 |
| Aerosil® 200 (Degussa AG) | 20 | - | 20 | 20 | 20 |
| Perkadox® 14/40 (Akzo) | 6 | 6 | 6 | 6 | 6 |

Die Vulkansiation wird bei 170°C durchgeführt. Die Vulkanisationszeit wird in einem Rheometerexperiment bei 170°C ermittelt.

### 2e) Prüfergebnisse:

Auf der Basis o.g. Compounds werden folgende Prüfergebnisse erhalten:

| | | | | | |
|---|---|---|---|---|---|
| Mooney ML (1+4),100°C | 65 | 45 | 94 | 125 | *1 |
| Mooney Scorch ML, 150°C, t5 [min] | 4,92 | 4,83 | 4,20 | 4,50 | 4,72 |
| Mooney-Scorch ML, 150°C, t35 [min] | 8,13 | 8,28 | 6,52 | 6,65 | 7,37 |

| Vulkanisation 170°C, Sofortprüfüng | | | | | |
|---|---|---|---|---|---|
| Härte Shore A, 23°C | 66 | 64 | 78 | 88 | 94 |
| Rückprallelastizität, 23°C [%] | 42 | 53 | 36 | 34 | 29 |
| Spannungswert bei 100 % Dehnung [MPa] | 2,3 | 3,0 | 3,7 | 5,7 | 7,8 |
| Spannungswert bei 300 % Dehnung [MPa] | 7,8 | 12,1 | 12,8 | 17,2 | 17,0 |
| Zugfestigkeit [MPa] | 37,5 | 23,9 | 29 | 24,5 | 17,0 |
| Reißdehnung [%] | 472 | 377 | 432 | 391 | 299 |
| Weiterreißfestigkeit [N/mm] | 18,8 | 10,3 | 21,5 | 32,6 | 42,8 |
| Druckverformungsrest DIN 53517 3 Tage bei 125°C [%] | 79 | 57 | 91 | 95 | 93 |

| Vulkanisation 170°C, Heißluftalterung 7 Tage bei 125°C | | | | | |
|---|---|---|---|---|---|
| Härte Shore A, 23°C | 70 | 64 | 82 | 91 | 95 |
| Rückprallelastizität, 23°C [%] | 41 | 45 | 38 | 38 | 39 |
| Spannungswert bei 100 % Dehnung [MPa] | 3,1 | 2,8 | 5,3 | 9,8 | 14,5 |
| Spannungswert bei 300 % Dehnung [MPa] | 14,8 | 11,5 | 18,0 | - | - |
| Zugfestigkeit [MPa] | 38,4 | 25,2 | 26,6 | 22,1 | 17,2 |
| Reißdehnung [%] | 478 | 418 | 400 | 291 | 150 |
| Weiterreißfestigkeit [N/mm] | 15 | 11,6 | 21,7 | 27,6 | 30,2 |

| Wasserlagerung 7 Tage bei 80°C | | | | | |
|---|---|---|---|---|---|
| Volumenänderung [%] | 18,2 | 6 | 10,1 | 11,9 | 14,6 |
| Gewichtsänderung [%] | 13,6 | 5,3 | 7,7 | 8,9 | 8,4 |
| Härte Shore A, 23°C | 38 | 54 | 62 | 71 | 81 |
| Zugfestigkeit [MPa] | 9,6 | 14,7 | 8,4 | 3,5 | 2,8 |
| Reißdehnung [%] | 559 | 423 | 513 | 511 | 14 |

| | | | | | |
|---|---|---|---|---|---|
| *1: Mooney-Viskosität zu hoch. Gerät schaltet ab. | | | | | |

### Beispiel 3: Hydroxylgruppenmodifizierte BR und SBR-Gele in PUR-Kautschukmatrices/Isocyanat vernetzt

Eingesetzt werden Gele, die bereits in der vorstehenden Tabelle beschrieben sind. Die Herstellung der hydroxylgruppenmodifizierten Mikrogele erfolgt auf Basis oben genannter Ausgangslatices in folgenden drei Verfahrensschritten:
3a) Vernetzung der in Latexform vorliegenden Kautschuke
3b) Propfung der vergelten Latices mit Hydroxylmethacrylat
3c) Stabilisierung und Aufarbeitung der hydroxylmodifizierten Mikrogele

Diese Verfahrensschritte entsprechen denen für das Beispiel 1 beschriebenen.

Die Herstellung der mikrogelhaltigen Kautschukcompounds sowie die Vulkanisation der Compounds entspricht ebenfalls dem Herstellungsverfahren und dem Vulkanisationsverfahren des Beispiels 1.

Die Prüfergebnisse sind in den nachfolgenden Tabellen zusammengefaßt.

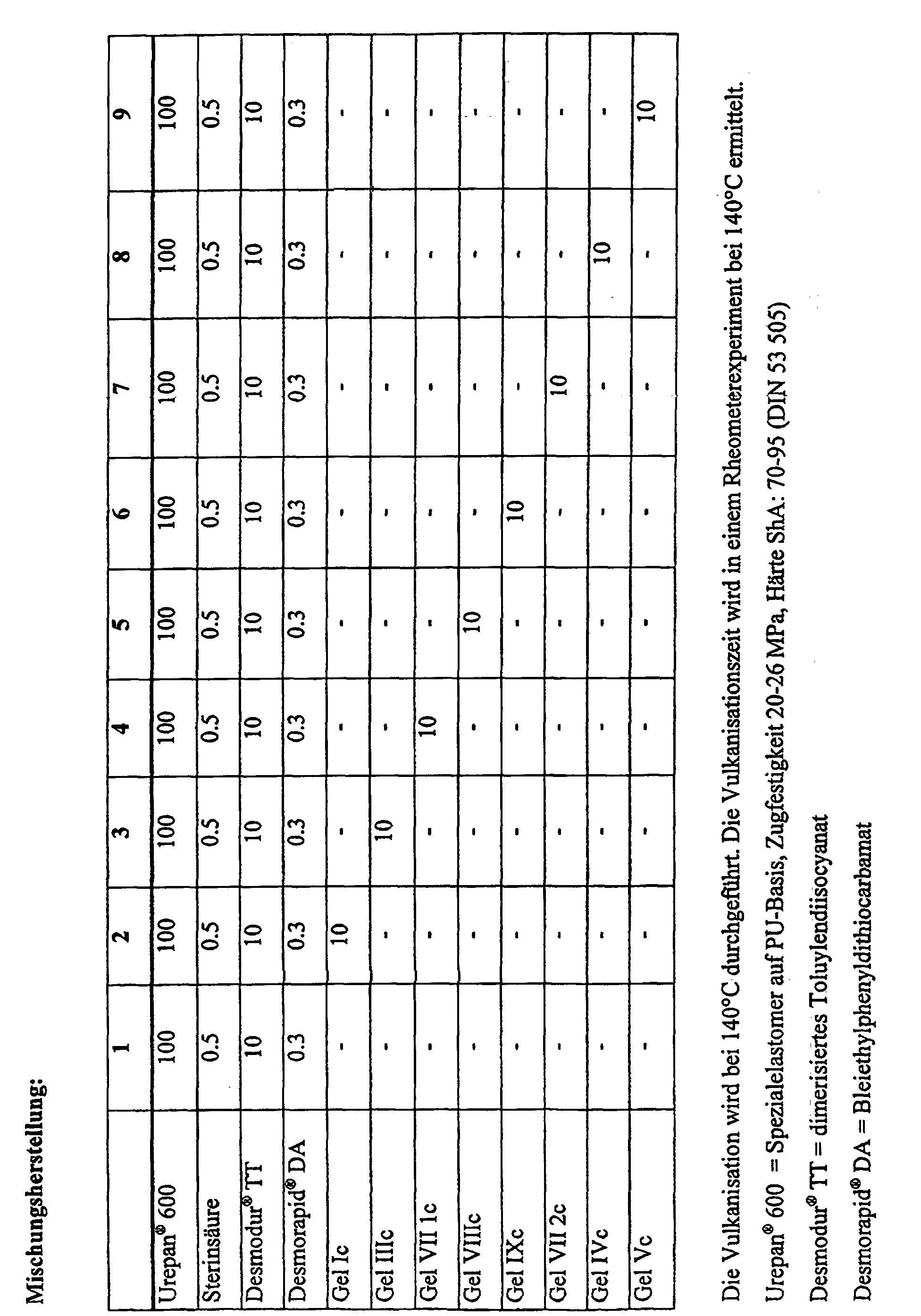

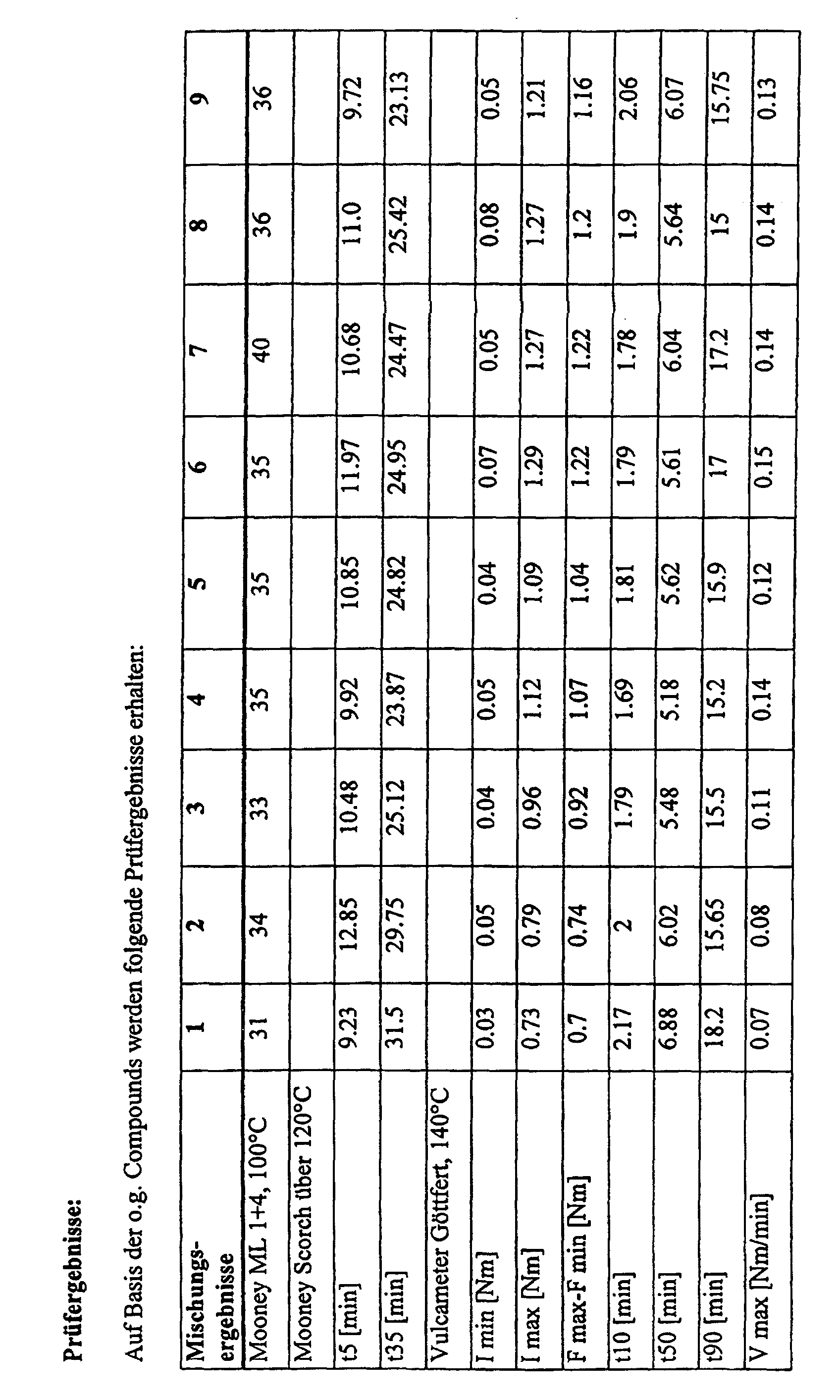

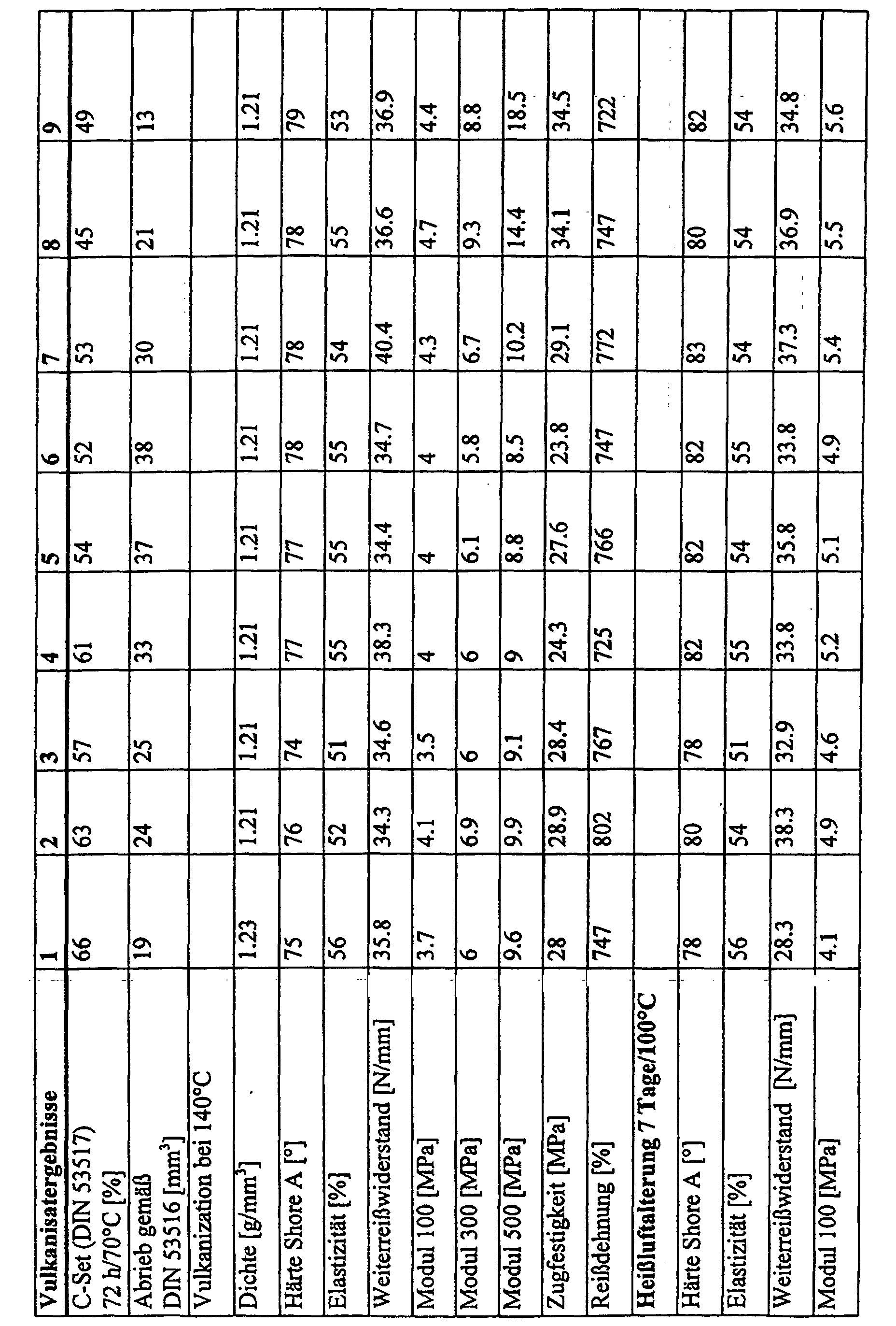

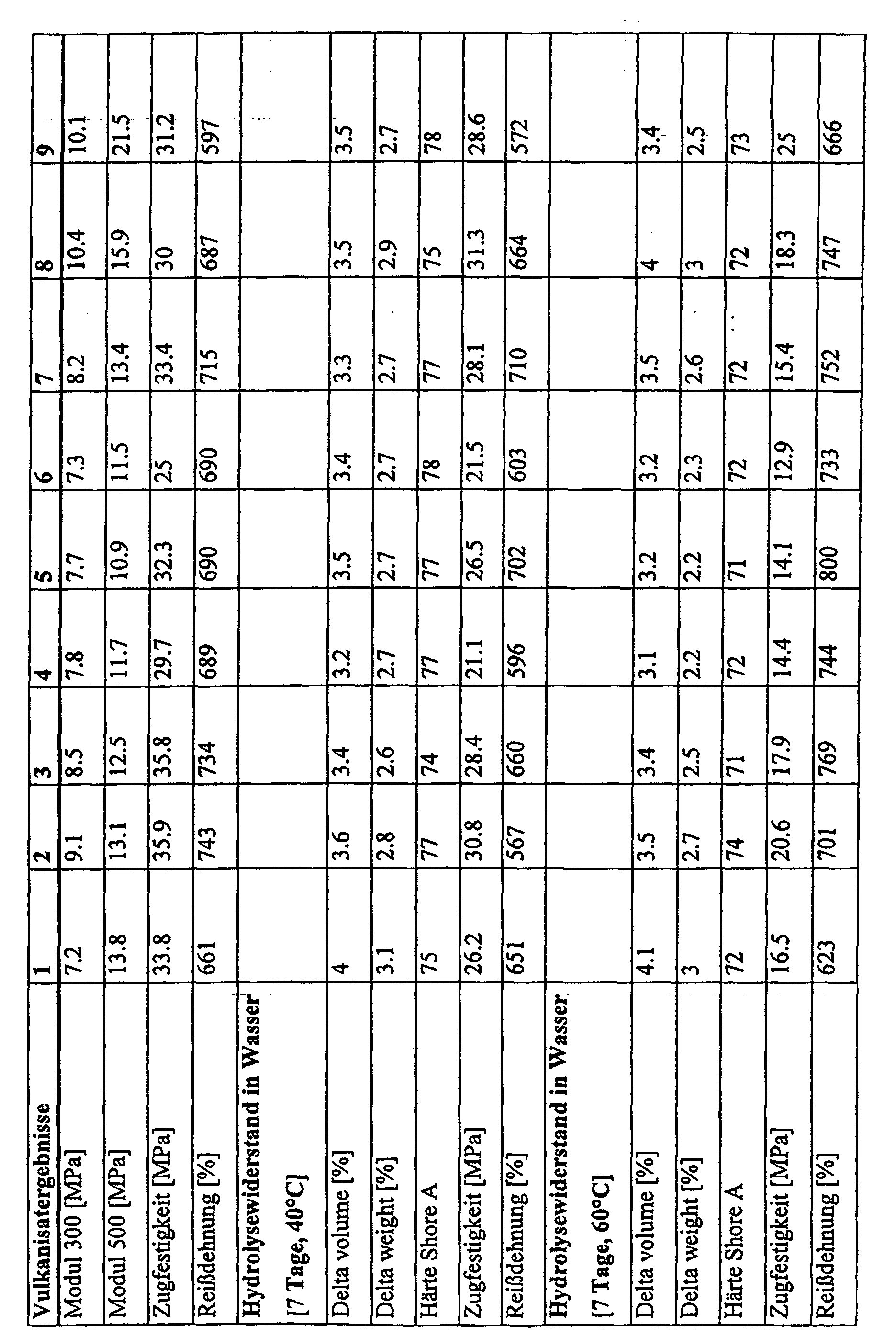

## Patentansprüche

1. Mischungen aus
A) mindestens einem mit polaren oder schwefelhaltigen, funktionellen Gruppen modifizierten Kautschukgel, das durch Umsetzung vernetzter Kautschuktellchen mit gegenüber C=C-Doppelbindungen reaktiven Verbindungen erhalten wird, und
B) mindestens einem Polyurethan-Kautschuk (PUR-Kautschuk),
wobei der Anteil an modifiziertem Kautschukgel (A) 1 bis 100 Gew.-Teile, bezogen auf 100 Gew.-Teile PUR-Kautschuk, beträgt.

2. Mischungen nach Anspruch 1, **dadurch gekennzeichnet, dass** das Kautschukgel (A) durch Umsetzung von 0,05 bis 30 Gew.-Teilen einer gegenüber C=C-Doppelbindungen reaktiven Verbindung, bezogen auf 100 Gew.-Teilen Kautschukgel, modifiziert wurde.

3. Mischungen nach Ansprüchen 1 und 2, **dadurch gekennzeichnet, dass** als reaktive Verbindungen solche eingesetzt werden, die in der Lage sind, Hydroxy- und/oder Carboxygruppen in das Kautschukgel (A) einzuführen.

4. Mischungen nach Ansprüchen 1 bis 3, **dadurch gekennzeichnet, dass** sie Füllstoffe und Kautschukhilfsmittel enthalten.

5. Kautschukmischungen nach Anspruch 1 bis 4, **dadurch gekennzeichnet, dass** das modifizierte Kautschukgel (A) einen Quellungsindex in Toluol von 1 bis 15 besitzt.

6. Mischungen nach Ansprüchen 1 bis 5, **dadurch gekennzeichnet, dass** das modifizierte Kautschukgel (A) eine Teilchengrösse von 5 bis 2000 nm aufweist.

7. Mischungen nach Ansprüchen 1 bis 6, **dadurch gekennzeichnet, dass** der PUR-Kautschuk eine Mooney-Viskosität von 10 bis 100 (ML 1+4)/100 DEG C besitzt.

8. Verwendung der Mischungengemass Ansprüchen 1 bis 7 zur Herstellung von Kautschukvulkanisaten, insbesondere Formkörpern.

## Claims

1. Mixtures of
A) at least one rubber gel modified with polar or sulfur-containing functional groups, which is obtained by reacting crosslinked rubber particles with compounds reactive towards C=C double bonds, and
B) at least one polyurethane rubber (PUR rubber),
the proportion of modified rubber gel (A) being 1 to 100 parts by weight, based on 100 parts by weight of PUR rubber.

2. Mixtures according to Claim 1, **characterized in that** the rubber gel (A) has been modified by reaction with 0.05 to 30 parts by weight of a compound reactive towards C=C double bonds, based on 100 parts by weight of rubber gel.

3. Mixtures according to Claims 1 and 2, **characterized in that** the reactive compounds used are those capable of introducing hydroxyl and/or carboxyl groups into the rubber gel (A).

4. Mixtures according to Claims 1 to 3, **characterized in that** they contain fillers and rubber processing aids.

5. Rubber mixtures according to Claims 1 to 4, **characterized in that** the modified rubber gel (A) has a swelling index in toluene of 1 to 15.

6. Mixtures according to Claims 1 to 5, **characterized in that** the modified rubber gel (A) has a particle size of 5 to 2000 nm.

7. Mixtures according to Claims 1 to 6, **characterized in that** the PUR rubber has a Mooney viscosity of 10 to 100 (ML 1+4)/100°C.

8. Use of the mixtures according to Claims 1 to 7 for the production of rubber vulcanizates, especially mouldings.

## Revendications

1. Mélanges de
A) au moins un gel de caoutchouc modifié avec des groupes fonctionnels polaires ou contenant du soufre, qui est obtenu par réaction de particules de caoutchouc réticulées avec des composés réactifs à l'égard des doubles liaisons C=C, et
B) au moins un caoutchouc de polyuréthane (caoutchouc PUR),
où la proportion de gel de caoutchouc modifié (A) est de 1 à 100 parties en masse pour 100 parties en masse de caoutchouc PUR.

2. Mélanges selon la revendication 1, **caractérisés en ce que** le gel de caoutchouc (A) a été modifié par réaction de 0,05 à 30 parties en masse d'un composé réactif à l'égard des doubles liaisons C=C pour 100 parties en masse de gel de caoutchouc.

3. Mélanges selon les revendications 1 et 2, **caractérisés en ce que** l'on utilise comme composés réactifs des composés qui sont capables d'introduire des groupes hydroxyles et/ou carboxyles dans le gel de caoutchouc (A).

4. Mélanges selon les revendications 1 à 3, **caractérisés en ce qu'**ils contiennent des charges et des adjuvants de caoutchouc.

5. Mélanges de caoutchouc selon les revendications 1 à 4, **caractérisés en ce que** le gel de caoutchouc modifié (A) possède un indice de gonflement dans le toluène de 1 à 15.

6. Mélanges selon les revendications 1 à 5, **caractérisés en ce que** le gel de caoutchouc modifié (A) présente une taille de particule de 5 à 2 000 nm.

7. Mélanges selon les revendications 1 à 6, **caractérisés en ce que** le caoutchouc PUR possède une viscosité Mooney de 10 à 100 (ML 1 + 4)/100 DEG C.

8. Utilisation des mélanges selon les revendications 1 à 7 pour la production de vulcanisats de caoutchouc, en particulier de corps mis en forme.
